# EUROPEAN PATENT SPECIFICATION

(11) **EP 3 136 034 B1**
(45) Date of publication and mention of the grant of the patent: **04.07.2018**
(21) Application number: 15783778.2
(22) Date of filing: 24.04.2015
(51) Int. Cl.: F28D 9/00, B60H 1/32, F25B 39/00, F28F 3/00, F28F 3/08, F28F 9/02, F25B 43/00, F28D 21/00

(54) **HEAT EXCHANGER**
WÄRMETAUSCHER
ÉCHANGEUR THERMIQUE

(30) Priority: 25.04.2014 JP 2014091419
(43) Date of publication of application: 01.03.2017
(73) Proprietor: Panasonic Intellectual Property Management Co., Ltd., Osaka-shi, Osaka 570-6207 (JP)
(72) Inventor: NODA, Yoshitoshi, Osaka-shi, Osaka 540-6207 (JP); ASAIDA, Yasuhiro, Osaka-shi, Osaka 540-6207 (JP); HAMADA, Hideaki, Osaka-shi, Osaka 540-6207 (JP); IKEDA, Mituhiro, Osaka-shi, Osaka 540-6207 (JP); KURODA, Kentaro, Osaka-shi, Osaka 540-6207 (JP)
(74) Representative: Schwabe - Sandmair - Marx
(86) International application number: PCT/JP2015/002223
(87) International publication number: WO 2015/162936

(56) References cited:
- EP-A1- 2 518 425
- EP-A2- 2 476 975
- EP-A2- 2 629 040
- DE-A1-102011 007 701
- JP-A- 2013 011 432
- JP-A- 2013 119 376
- US-A1- 2014 102 682

## Description

### TECHNICAL FIELD

The present invention relates to a heat exchanger.

### BACKGROUND ART

A conventional heat exchanger that transfers heat between a refrigerant and a coolant is integrally provided with a receiver tank (for example, see PTL 1). The receiver tank subjects the refrigerant to a vapor-liquid separation and adjusts an amount of the refrigerant.

The heat exchanger disclosed in PTL 1 is structured by stacking a plurality of plates. With the stacking of the plates, passages for a coolant and passages for a refrigerant are alternately formed in a layered fashion. These passages constitute a heat exchange portion for the coolant and the refrigerant. The receiver tank is formed transversely of the heat exchange portion. A constituent element for the receiver tank is provided transversely of each part of the plates where the passage for a coolant or the passage for a refrigerant is formed. These constituent elements are stacked, so that the receiver tank is formed integrally with the heat exchange portion.

As described in PTL 1, by providing the receiver tank integrally with the heat exchanger, piping for connecting the receiver tank to the heat exchanger can be eliminated. Consequently, it is possible to reduce, for example, factors in a refrigerant leak, a number of components, and an installation space.

EP 2 629 040 A2 discloses a unitary heat pump air conditioner having a heat exchanger with an integral receiver and sub-cooler. The heat discloses the features according to the preamble of claim 1 and includes a plurality of plates stacked and hermetically sealed between an upstream end plate and a downstream end plate, defining a condenser/chiller portion having a first coolant passageway, a sub-cooler portion having a second coolant passageway and a refrigerant receiver portion sandwiched between the condenser/chiller portion and the sub-cooler portion.

### Citation List

### Patent Literature

PTL 1: Unexamined Japanese Patent Publication No. 2013-119373

### SUMMARY

The present invention provides a heat exchanger integrated with a receiver tank to have a structure that enables to allow both a capacity of the receiver tank and an area of a heat exchange portion to be adjusted at low cost at least when the heat exchanger is designed.

The heat exchanger according to an aspect of the present invention includes a first stack portion and a second stack portion. The first stack portion has a plurality of plates which are stacked, and a first refrigerant passage and a first coolant passage are formed between the plurality of plates. The second stack portion has a plurality of receiver components which are stacked, and a refrigerant retaining portion leading to the first refrigerant passage is formed in the plurality of receiver components. The second stack portion is stacked on the first stack portion in the same direction as a stacking direction in which the plurality of plates are stacked.

According to the present invention, in the heat exchanger integrated with the receiver tank, both the capacity of the receiver tank and the area of the heat exchange portion can be adjusted at low cost at least when the heat exchanger is designed.

### BRIEF DESCRIPTION OF DRAWINGS

FIG. 1 is a perspective view of a structure of a heat exchanger according to an exemplary embodiment of the present invention.
FIG. 2 is an exploded perspective view of the structure of the heat exchanger according to the exemplary embodiment of the present invention.
FIG. 3 is a longitudinal sectional view of the heat exchanger according to the exemplary embodiment of the present invention, taken at a line from a position of a refrigerant inlet to a position of a refrigerant outlet.
FIG. 4 is a longitudinal sectional view of the heat exchanger according to the exemplary embodiment of the present invention, taken at a line from a position of a coolant inlet to a position of a coolant outlet.

### DESCRIPTION OF EMBODIMENT

Prior to the description of an exemplary embodiment of the present invention, a disadvantage of a conventional heat exchanger will be briefly described. A heat exchange portion is required to be designed to have a suitable size according to, for example, a performance of a heat pump system and a limited space in which the heat exchanger is to be positioned. In the heat exchanger constituted by a plurality of plates which are stacked, a size of the heat exchange portion can be increased or reduced by changing a stacking number of the plates when the heat exchanger is designed.

A receiver tank is required to be designed to have a suitable size according to, for example, the performance of the heat pump system and the limited space in which the heat exchanger is to be positioned. With the structure of the heat exchanger in PTL 1, a capacity of the receiver tank can be increased or reduced by changing the stacking number of the plates when the heat exchanger is designed.

However, the structure of the heat exchanger in PTL 1 has a disadvantage that the size of the heat exchange portion and the capacity of the receiver tank cannot be independently adjusted by changing the stacking number of the plates. The stacking number of the plates can be changed at low manufacturing cost. However, a shape change in the plates involves a change in a mold, and thus the cost is increased.

The exemplary embodiment of the present invention will be described below with reference to the drawings.

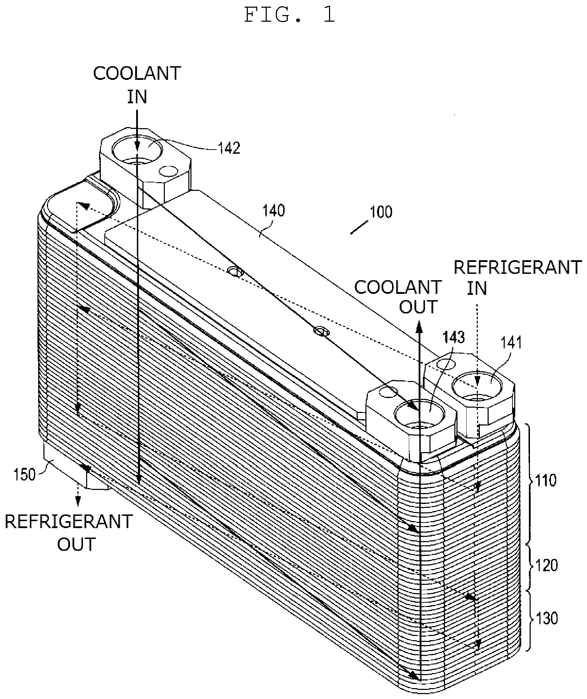

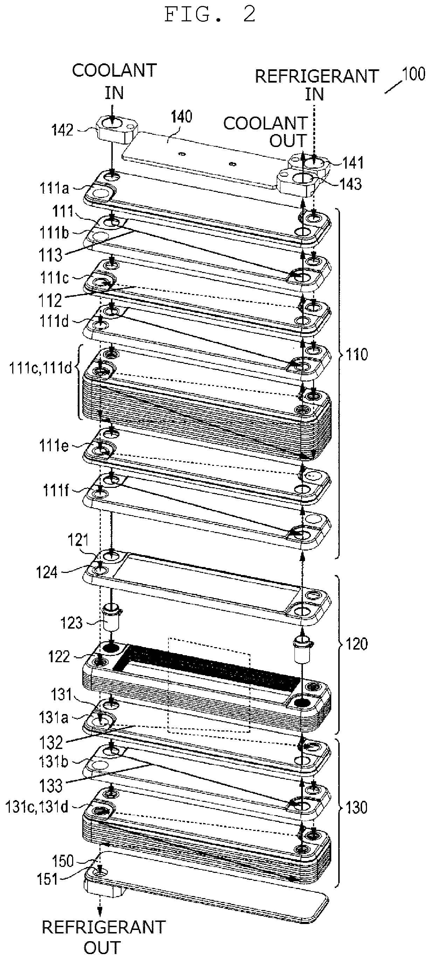

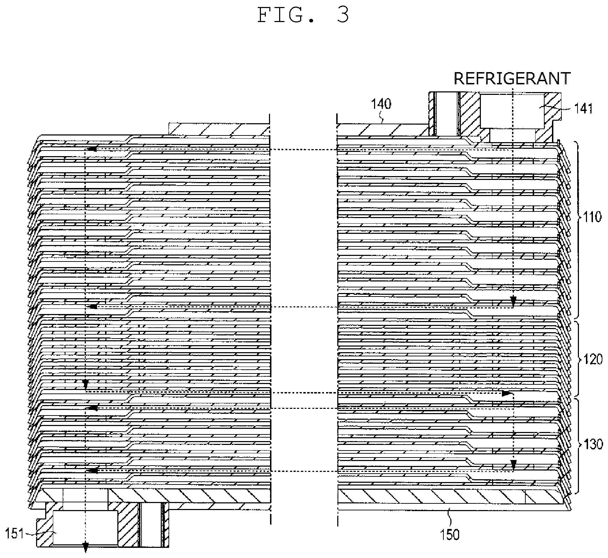

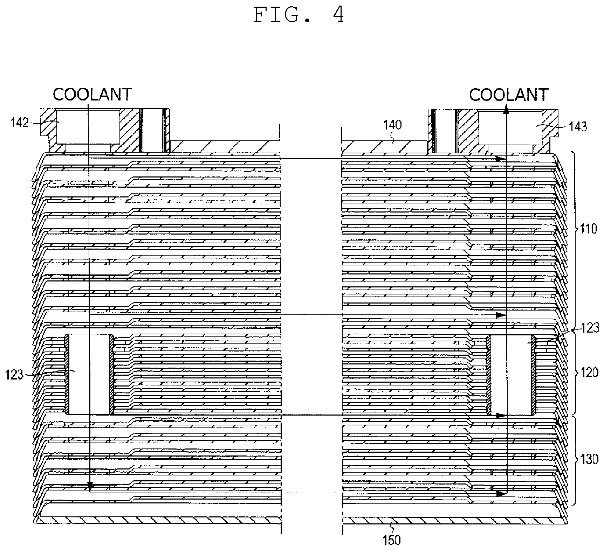

FIG. 1 is a perspective view of a structure of heat exchanger 100 according to the exemplary embodiment of the present invention. FIG. 2 is an exploded perspective view of a plurality of plates constituting heat exchanger 100. FIG. 3 is a longitudinal sectional view of heat exchanger 100, taken at a line from a position of a refrigerant inlet to a position of a refrigerant outlet. FIG. 4 is a longitudinal sectional view of heat exchanger 100, taken at a line from a position of a coolant inlet to a position of a coolant outlet.

Heat exchanger 100 transfers heat between a refrigerant and a coolant. Heat exchanger 100 is mainly formed of first stack portion 110, second stack portion 120, and third stack portion 130.

Upper cover 140 is mounted on an upper part of the first stack portion 110, and lower cover 150 is mounted on a lower part of third stack portion 130.

Upper cover 140 is provided with refrigerant inlet 141 that allows a high-pressure refrigerant compressed by a compressor to flow into first stack portion 110, coolant inlet 142 into which a coolant flows, and coolant outlet 143 of which a coolant subjected to a heat exchange flows out. Further, lower cover 150 is provided with refrigerant outlet 151 that allows a refrigerant subjected to a heat exchange to flow out of third stack portion 130.

First stack portion 110 serves as a condenser. First stack portion 110 transfers heat between a high-temperature and high-pressure refrigerant delivered from the compressor and a coolant, causing the refrigerant to condense. The coolant is, for example, an antifreeze solution such as long life coolant (LLC) for use in transferring heat.

As illustrated in FIG. 2, first stack portion 110 includes a plurality of condenser plates 111 which are stacked. In first stack portion 110, a passage for a refrigerant (refrigerant passage) and a passage for a coolant (coolant passage) are formed between the plurality of condenser plates 111. The passage for a refrigerant and the passage for a coolant are respectively referred to as first refrigerant passage 112 and first coolant passage 113. Specifically, as illustrated in FIG. 2, condenser plates 111a to 111f of different shapes are stacked, so that the refrigerant passage and the coolant passage are alternately formed between condenser plates 111. The refrigerant and the coolant respectively pass through the refrigerant passage and the coolant passage, without mixing each other. The refrigerant and the coolant respectively pass through the refrigerant passage and the coolant passage, flowing in directions opposite to each other. Thus, in first stack portion 110, the refrigerant passes through the refrigerant passage and the coolant passes through the coolant passage, so that heat is transferred between the refrigerant and the coolant, causing the refrigerant to condense.

FIG. 2 illustrates an exemplary case in which the refrigerant and the coolant respectively pass through the refrigerant passage and the coolant passage, flowing in directions opposite to each other. However, the configuration is not limited to this case. The refrigerant and the coolant may respectively pass through the refrigerant passage and the coolant passage, flowing in an identical direction.

A size of first stack portion 110 (i.e., an area of a heat exchange portion) is adjusted by changing a stacking number of condenser plates 111c and condenser plates 111d when heat exchanger 100 is designed.

Second stack portion 120 serves as a receiver tank. Second stack portion 120 retains a refrigerant flowed from first stack portion 110, subjects the refrigerant to a vapor-liquid separation, and adjusts an amount of the refrigerant.

As illustrated in FIG. 2, second stack portion 120 includes a plurality of receiver plates 121 which are stacked. Receiver plate 121 is shaped like a window frame with a central hole. Receiver plates 121 are stacked on condenser plates 111 to be continuous to condenser plates 111. Thus, second stack portion 120 is stacked on first stack portion 110 in a direction in which condenser plates 111 are stacked.

As illustrated in FIG. 2, in second stack portion 120, refrigerant retaining portion 122 leading to the passage for a refrigerant of first stack portion 110 is formed inside stacked receiver plates 121. That is, stacked receiver plates 121 constitute a side of refrigerant retaining portion 122; a lowermost plate of first stack portion 110 (i.e., condenser plate 111f) serves as an upper surface of refrigerant retaining portion 122; and an uppermost plate of third stack portion 130 (subcool plate 131a), which is described later, serves as a lower surface of refrigerant retaining portion 122. The refrigerant delivered from first stack portion 110 passes through refrigerant passage aperture 124 of the second stack portion 120, and flows into refrigerant retaining portion 122 from a lowermost portion of second stack portion 120.

A vapor-phase refrigerant, in addition to a liquid-phase refrigerant, may mix with the refrigerant flowed from first stack portion 110 (condenser). Refrigerant retaining portion 122 subjects the refrigerant to a vapor-liquid separation, moves the vapor-phase refrigerant vertically upward, and moves the liquid-phase refrigerant vertically downward. Thus, a lower part of refrigerant retaining portion 122 serves as a retaining part for the liquid-phase refrigerant.

A coolant having passed through first stack portion 110 passes through second stack portion 120 via coolant passage 123, and flows into third stack portion 130.

Each condenser plate 111 and each receiver plate 121 have an identical size in a stacking direction in which condenser plates 111 and receiver plates 121 are stacked. Further, outlines and sizes of each condenser plate 111 and outlines and sizes of each receiver plate 121 in orthogonal projection onto a surface perpendicular to the stacking direction are identical to each other.

A size of second stack portion 120 (i.e., a capacity of the receiver tank) is adjusted by changing a stacking number of receiver plates 121 when heat exchanger 100 is designed.

Third stack portion 130 serves as a subcool part. In third stack portion 130, heat is transferred between the refrigerant flowed from second stack portion 120 (receiver tank) and the coolant flowed from first stack portion 110. Thus, third stack portion 130 additionally cools a liquid-phase refrigerant condensed in first stack portion 110.

As illustrated in FIG. 2, third stack portion 130 includes a plurality of subcool plates 131 which are stacked. Condenser plates 111, receiver plates 121, and subcool plates 131 are successively stacked. Thus, third stack portion 130 is stacked on second stack portion 120 in the direction in which condenser plates 111 and receiver plates 121 are stacked. In third stack portion 130, a refrigerant passage for subcooling and a coolant passage for subcooling are formed between the plurality of subcool plates 131. The refrigerant passage for subcooling and the coolant passage for subcooling are respectively referred to as second refrigerant passage 132 and second coolant passage 133. Specifically, as illustrated in FIG. 2, subcool plates 131a to 131d of different shapes are stacked, so that the refrigerant passage for subcooling and the coolant passage for subcooling are alternately formed between subcool plates 131. The refrigerant and the coolant respectively pass through the refrigerant passage and the coolant passage, without mixing each other. The refrigerant and the coolant respectively pass through the refrigerant passage and the coolant passage, flowing in directions opposite to each other. Thus, in third stack portion 130, the refrigerant passes through the refrigerant passage and the coolant passes through the coolant passage, so that heat is transferred between the refrigerant and the coolant, causing a liquid-phase refrigerant to be further cooled.

A size of third stack portion 130 (i.e., an area of a heat exchange portion) is adjusted by changing a stacking number of subcool plates 131c and subcool plates 131d which are alternately stacked when heat exchanger 100 is designed.

In heat exchanger 100, first stack portion 110, second stack portion 120, and third stack portion 130 are sequentially stacked in this order. Further, the passage for a refrigerant in first stack portion 110 leads to refrigerant retaining portion 122 of second stack portion 120. The retaining part for a liquid-phase refrigerant in refrigerant retaining portion 122 leads to the passage for a refrigerant in third stack portion 130.

That is, as illustrated in FIG. 3, a refrigerant flowed from refrigerant inlet 141 passes through the refrigerant passages that are alternately formed with the coolant passages in first stack portion 110, to condense, and flows into second stack portion 120 (receiver tank). The refrigerant that flows into refrigerant retaining portion 122 of second stack portion 120 is subjected to a liquid-phase separation, and an amount of the refrigerant is adjusted. Then, a liquid-phase refrigerant flows into third stack portion 130, passes through the refrigerant passages that are alternately formed with the coolant passages, to be further cooled, and then flows out of refrigerant outlet 151.

Meanwhile, as illustrated in FIG. 4, a coolant flowed from coolant inlet 142 passes through the coolant passages that are alternately formed with the refrigerant passages in first stack portion 110 (condenser) and in third stack portion 130 (subcool part) to which coolant passage 123 leads, to absorb heat from a refrigerant, and flows out of coolant outlet 143.

As described above, in heat exchanger 100 according to the exemplary embodiment, condenser plates 111, receiver plates 121, and subcool plates 131 are successively stacked in an identical direction, to form a condenser (first stack portion 110), a receiver tank (second stack portion 120), and a subcool part (third stack portion 130), respectively.

In heat exchanger 100 of this structure, a size of the condenser and the subcool part (heat exchange portion) can be adjusted by adjusting the stacking number of condenser plates 111 and subcool plates 131 according to, for example, a performance of a heat pump system, and a limited space in which heat exchanger 100 is to be positioned.

Further, in heat exchanger 100, a capacity of the receiver tank can be adjusted by changing the stacking number of receiver plates 121 according to, for example, a performance of a heat pump system, and a limited space in which heat exchanger 100 is to be positioned.

That is, in heat exchanger 100, the size of the heat exchange portion and the capacity of the receiver tank can be independently adjusted by individually changing the stacking number of condenser plates 111, the stacking number of receiver plates 121, and the stacking number of subcool plates 131.

For example, even if different models of vehicles have different specifications (e.g., a performance of a heat pump system and a capacity of a receiver tank), heat exchanger 100 can be structured to meet any of the different specifications by changing the stacking number of the respective plates. As described above, the structure of heat exchanger 100 can be adjusted by changing the stacking number of the plates, so that for example, commonality of a mold for the plates is achieved. Thus, the manufacturing cost can be reduced.

Further, in heat exchanger 100, each condenser plate 111 and each receiver plate 121 have an identical size in the direction in which condenser plates 111 and receiver plates 121 are stacked. Additionally, shapes of condenser plates 111 and receiver plates 121 are identical. Accordingly, heat exchanger 100 can be manufactured at low cost using a method for manufacturing a typical plate heat exchanger.

Furthermore, in heat exchanger 100, the condenser, the receiver tank, and the subcool part are integrally formed, so that piping for connecting these components, and a sealing are eliminated. This eliminates a possibility of a leak at a joint, and results in low manufacturing cost.

Thus, in the heat exchanger integrated with the receiver tank according to the exemplary embodiment, both the capacity of the receiver tank and an area of the heat exchange portion can be independently adjusted at low cost at least when the heat exchanger is designed.

The exemplary embodiment of the present invention has been described above. In the exemplary embodiment, refrigerant retaining portion 122 is constituted by the holes formed in receiver plates 121, as illustrated in FIG. 2. However, receiver plate 121 does not need to be shaped like a window frame with a hole. Receiver plate 121 may be shaped like a plate without a hole, such as condenser plate 111 and subcool plate 131. When receiver plate 121 is not provided with a hole, a passage for a refrigerant is formed between receiver plates 121, and a refrigerant is retained in the passages.

In FIG. 1, heat exchanger 100 is exemplarily positioned such that upper cover 140 faces vertically upward and lower cover 150 faces vertically downward. However, the position of heat exchanger 100 in use is not limited to such a position. For example, heat exchanger 100 in use may be positioned such that coolant inlet 142 and refrigerant outlet 151 face vertically upward and refrigerant inlet 141 and coolant outlet 143 face vertically downward.

Further, in the exemplary embodiment, the size of receiver plate 121 is identical to that of condenser plate 111 or subcool plate 131 in the direction in which receiver plates 121, condenser plates 111, and subcool plates 131 are stacked. However, receiver components that constitute second stack portion 120 do not need to be shaped like a plate or a window frame that has a thickness sufficiently smaller than a breadth. Alternatively, the receiver components may each be shaped to have a large thickness. Second stack portion 120 may be provided by a plurality of receiver components each having a large thickness, which are stacked.

### INDUSTRIAL APPLICABILITY

The present invention is applicable to an air conditioner mounted in a vehicle.

### REFERENCE MARKS IN THE DRAWINGS

- 100: heat exchanger
- 110: first stack portion
- 111, 111a, 111b, 111c, 111d, 111e, 111f: condenser plate
- 112: first refrigerant passage
- 113: first coolant passage
- 120: second stack portion
- 121: receiver plate
- 122: refrigerant retaining portion
- 123: coolant passage
- 124: refrigerant passage aperture
- 130: third stack portion
- 131, 131a, 131b, 131c, 131d: subcool plate
- 132: second refrigerant passage
- 133: second coolant passage
- 140: upper cover
- 141: refrigerant inlet
- 142: coolant inlet
- 143: coolant outlet
- 150: lower cover
- 151: refrigerant outlet

## Claims

1. A heat exchanger comprising:
a first stack portion (110) including a plurality of plates (111a to 111f) which are stacked, a first refrigerant passage (112) and a first coolant passage (113) which are formed between the plurality of plates (111a to 111f);
a second stack portion (120) including a plurality of receiver components (121) which are stacked and a refrigerant retaining portion (122) leading to the first refrigerant passage (112) and being formed in the plurality of receiver components (121), the second stack portion (120) being stacked on the first stack portion in a same direction as a stacking direction in which the plurality of plates are stacked;
a third stack portion (130) for subcooling, including a plurality of subcool plates (131a to 131d) which are stacked and a second refrigerant passage (132) for subcooling and a second coolant passage (133) for subcooling which are formed between the plurality of subcool plates(131a to 131d), the third stack portion (130) being further stacked on the second stack portion (120) in a same direction as a stacking direction in which the first stack portion (110) and the second stack portion (120) are stacked,
**characterised in that**
each of the plurality of receiver components (121) has a window frame shape provided with a central hole, and
the stacked plurality of receiver components (121) constitute a side of the refrigerant retaining portion (122), one of the plurality of plates (111f), closest to the second stack portion (120), of the first stack portion (110) serves as an upper surface of the refrigerant retaining portion (122), and one of the plurality of subcool plates (131a), closest to the second stack portion (120), of the third stack portion (130) serves as a lower surface of the refrigerant retaining portion (122).

2. The heat exchanger according to claim 1, wherein a size of each of the plurality of plates in the stacking direction of the plurality of plates is identical to a size of each of the plurality of receiver components (121) in a stacking direction in which the plurality of receiver components (121) are stacked.

3. The heat exchanger according to claim 1, wherein a shape and a size of each of the plurality of plates in an outline obtained by an orthogonal projection onto a surface perpendicular to the stacking direction of the plurality of plates are identical to a shape and a size of each of the plurality of receiver components (121) in an outline obtained by an orthogonal projection onto a surface perpendicular to the stacking direction of the plurality of receiver components (121).

4. The heat exchanger according to claim 1, wherein the refrigerant retaining portion (122) has a liquid-phase refrigerant retaining portion leading to the second refrigerant passage (132).

## Patentansprüche

1. Wärmetauscher, umfassend:
einen ersten Stapelabschnitt (110), der eine Vielzahl von Platten (111a bis 111f) enthält, die gestapelt sind, einen ersten Kältemittelkanal (112) und einen ersten Kühlmittelkanal (113), die zwischen der Vielzahl von Platten (111a bis 111f) gebildet sind;
einen zweiten Stapelabschnitt (120), der eine Vielzahl von Empfangerkomponenten (121) enthält, die gestapelt sind, und einen Kältemittelhalteabschnitt (122), der zu dem ersten Kältemittelkanal (112) führt und in der Vielzahl von Empfängerkomponenten (121) gebildet ist, wobei der zweite Stapelabschnitt (120) auf dem ersten Stapelabschnitt in derselben Richtung gestapelt ist, wie eine Stapelrichtung in der eine Vielzahl von Platten gestapelt sind;
einen dritten Stapelabschnitt (130) zum Unterkühlen, der eine Vielzahl von Unterkühlungsplatten (131a bis 131d) enthält, die gestapelt sind, und einen zweiten Kältemittelkanal (132) zum Unterkühlen und einen zweiten Kühlmittelkanal (133) zum Unterkühlen, die zwischen der Vielzahl von Unterkühlungsplatten (131a bis 131d) gebildet sind, wobei der dritte Stapelabschnitt (130) ferner auf dem zweiten Stapelabschnitt (120) in derselben Richtung wie eine Stapelrichtung gestapelt ist, in der der erste Stapelabschnitt (110) und der zweite Stapelabschnitt (120) gestapelt sind,
**dadurch gekennzeichnet, dass**
jede der Vielzahl von Empfängerkomponenten (121) eine Fensterrahmenform hat, die mit einem Mittelloch ausgestattet ist, und
die gestapelte Vielzahl von Empfangerkomponenten (121) eine Seite des Kältemittelhalteabschnitts (122) darstellt, eine der Vielzahl von Platten (111f) des ersten Stapelabschnitts (110), die am nächsten zu dem zweiten Stapelabschnitt (120) ist, als eine obere Fläche des Kältemittelhalteabschnitts (122) dient, und eine der Vielzahl von Unterkühlungsplatten (131a) des dritten Stapelabschnitts (130), die am ächsten zu dem zweiten Stapelabschnitt (120) ist, als eine untere Fläche des Kältemittelrückhalteabschnitts (122) dient.

2. Wärmetauscher nach Anspruch 1, wobei eine Größe jeder der Vielzahl von Platten in der Stapelrichtung der Vielzahl von Platten mit einer Größe jeder der Vielzahl von Empfängerkomponenten (121) in einer Stapelrichtung identisch ist, in der die Vielzahl von Empfängerkomponenten (121) gestapelt sind.

3. Wärmetauscher nach Anspruch 1, wobei eine Form und eine Größe jeder der Vielzahl von Platten in einem Umriss, der durch eine orthogonale Projektion auf eine Fläche erhalten wird, senkrecht zu der Stapelrichtung der Vielzahl von Platten ist, die identisch mit einer Form und einer Größe jeder der Vielzahl von Empfängerkomponenten (121) in einem Umriss ist, der durch eine orthogonale Projektion auf eine Fläche erhalten wird, senkrecht zu der Stapelrichtung der Vielzahl von Empfängerkomponenten (121).

4. Wärmetauscher nach Anspruch 1, wobei der Kältemittelhalteabschnitt (122) einen Flüssigphasen-Kältemittelrückhalteabschnitt hat, der zu dem zweiten Kältemittelkanal (132) führt.

## Revendications

1. Échangeur thermique comprenant :
une première partie d'empilement (110) comprenant une pluralité de plaques (111a à 111f) qui sont empilées, un premier passage de réfrigérant (112) et un premier passage de fluide de refroidissement (113) qui sont formés entre la pluralité de plaques (111a à 111f) ;
une deuxième partie d'empilement (120) comprenant une pluralité de composants de réception (121) qui sont empilés et une partie de rétention de réfrigérant (122) conduisant au premier passage de réfrigérant (112) et étant formée dans une pluralité de composants de réception (121), la deuxième parie d'empilement (120) étant empilée sur la première partie d'empilement dans une même direction qu'une direction d'empilement dans laquelle la pluralité de plaques sont empilées ;
une troisième partie d'empilement (130) pour le sous-refroidissement, comprenant une pluralité de plaques de sous-refroidissement (131a à 131d) qui sont empilées et un deuxième passage de réfrigérant (132) pour le sous-refroidissement et un deuxième passage de liquide de refroidissement (133) pour le sous-refroidissement qui sont formés entre la pluralité de plaques de sous-refroidissement (131a à 131d), la troisième partie d'empilement (130) étant en outre empilée sur la deuxième partie d'empilement (120) dans une même direction qu'une direction d'empilement dans laquelle la première partie d'empilement (110) et la deuxième partie d'empilement (120) sont empilées.
**caractérisé en ce que**
chacun de la pluralité de composants de réception (121) présente une forme d'encadrement de fenêtre dotée d'un orifice central, et
la pluralité empilée de composants de réception (121) constituent un côté de la partie de rétention de réfrigérant (122), une de la pluralité de plaques (111f), au plus près de la deuxième partie d'empilement (120), de la première partie d'empilement (110) sert de surface supérieure de la partie de rétention de réfrigérant (122) et une de la pluralité de plaques de sous-refroidissement (131a), au plus près de la deuxième partie d'empilement (120), de la troisième partie d'empilement (130) sert de surface inférieure de la partie de rétention de réfrigérant (122).

2. Échangeur thermique selon la revendication 1, dans lequel une dimension de chacune de la pluralité de plaques dans la direction d'empilement de la pluralité de plaques est identique à une dimension de chacun de la pluralité de composants de réception (121) dans une direction d'empilement dans laquelle la pluralité de composants de réception (121) sont empilés.

3. Échangeur thermique selon la revendication 1, dans lequel une forme et une dimension de chacune de la pluralité de plaques dans un contour obtenu par une projection orthogonale sur une surface perpendiculaire à la direction d'empilement de la pluralité de plaques sont identiques à une forme et une dimension de chacun de la pluralité de composants de réception (121) dans un contour obtenu par une projection orthogonale sur une surface perpendiculaire à la direction d'empilement de la pluralité de composants de réception (121).

4. Échangeur thermique selon la revendication 1, dans lequel la partie de rétention de réfrigérant (122) présente une partie de rétention de réfrigérant à phase liquide conduisant au deuxième passage de réfrigérant (132).
